# EUROPEAN PATENT APPLICATION

(11) **EP 4 637 069 A1**
(43) Date of publication of application: **22.10.2025**
(21) Application number: 25167371.1
(22) Date of filing: 31.03.2025
(51) Int. Cl.: H04L 5/00

(54) **METHOD FOR TIME AND FREQUENCY TRACKING**

(30) Priority: 15.04.2024 GB 202405315
(71) Applicant: Nokia Technologies Oy, 02610 Espoo (FI)
(72) Inventor: HAKOLA, Sami-Jukka, Oulu (FI); KOSKELA, Timo, Oulu (FI); KARJALAINEN, Juha Pekka, Sotkamo (FI)
(74) Representative: Nokia EPO representatives

(57) **Abstract**

An apparatus comprising: means for signaling a UE capability of an allocation dependent tracking reference signal to an access node, said UE capability of the allocation dependent tracking reference signal comprising one or more capability parameters allowing to omit transmission of a periodical tracking reference signal, TRS; means for receiving a Synchronization Signal Block, SSB, from the access node; means for performing time and frequency tracking and parameter estimation based on the SSB; means for receiving a Physical Downlink Control Channel, PDCCH, data comprising first transmission parameters determined based on the UE capability of the allocation dependent tracking reference signal; means for determining a Physical Downlink Shared Channel, PDSCH, allocation for the UE based on the PDCCH data; means for receiving PDSCH data comprising second transmission parameters determined based on the UE capability of the allocation dependent tracking reference signal;means for monitoring performance of the PDSCH reception comprising the second transmission parameters determined based on the UE capability of the allocation dependent tracking reference signal; and means for initiating, in response to detecting the performance of the PDSCH reception being below at least one predetermined threshold, a radio resource control (RRC) capability indication signaling with the access node.

## Description

### TECHNICAL FIELD

The present invention relates to time and frequency tracking and synchronization.

### BACKGROUND

In 3GPP New Radio (NR), a user equipment (UE) is configured to receive periodical tracking reference signal (TRS). TRS is configured UE-specifically to enable the UE to perform fine time and frequency synchronization tracking in the serving cell. TRS facilitates the UE to estimate the time and frequency domain parameters to set the channel estimator parameters properly for the reception of the Physical Downlink Control Channel (PDCCH), Physical Downlink Shared Channel (PDSCH) and Channel State Information Reference Signals (CSI-RS).

The TRS is configured separately for each UE. The TRS is sent periodically, with the burst periodicity being either 10, 20, 40 or 80 ms.

However, such UE specific periodic TRS imposes high system overhead. Furthermore, periodic signal and channel transmissions are inevitably inefficient in terms of energy consumption.

### SUMMARY

Now, an improved method and technical equipment implementing the method has been invented, by which the above problems are alleviated. Various aspects include a method, an apparatus and a non-transitory computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus comprising means for signaling a UE capability of an allocation dependent tracking reference signal to an access node, said UE capability of the allocation dependent tracking reference signal comprising one or more capability parameters allowing to omit transmission of a periodical tracking reference signal, TRS; means for receiving a Synchronization Signal Block, SSB, from the access node; means for performing time and frequency tracking and parameter estimation based on the SSB; means for receiving a Physical Downlink Control Channel, PDCCH, data comprising first transmission parameters determined based on the UE capability of the allocation dependent tracking reference signal; means for determining a Physical Downlink Shared Channel, PDSCH, allocation for the UE based on the PDCCH data; means for receiving PDSCH data comprising second transmission parameters determined based on the UE capability of the allocation dependent tracking reference signal; means for monitoring performance of the PDSCH reception comprising transmission parameters determined based on the UE capability of the allocation dependent tracking reference signal; and means for initiating, in response to detecting the performance of the PDSCH reception being below at least one predetermined threshold, a radio resource control (RRC) capability indication signaling with the access node.

According to an embodiment, the apparatus may comprise means for indicating, in the UE capability of the allocation dependent tracking reference signal, allowed transmission conditions and parameters for the PDCCH and PDSCH for which the UE needs only an aperiodic TRS before reception of PDCCH and PDSCH.

According to an embodiment, the apparatus may comprise means for indicating minimum required TRS transmission periodicity for said PDCCH and PDSCH transmission parameters.

According to an embodiment, the apparatus may comprise means for receiving a Physical Uplink Shared Channel, PUSCH, grant comprising third transmission parameters determined based on the UE capability of the allocation dependent tracking reference signal; and means for determining a PUSCH allocation for the UE based on the PUSCH grant.

According to an embodiment, the apparatus may comprise means for indicating maximum limits for the transmission parameters related to the PUSCH allowing to omit the transmission of the periodical TRS.

According to an embodiment, the UE capability of the allocation dependent tracking reference signal comprises at least one of the following for PDSCH reception for which the TRS is not needed:
- maximum modulation and coding scheme (MCS);
- maximum rank;
- maximum bandwidth;
- maximum frequency separation of PDSCH allocation from SSB location in frequency.

According to an embodiment, the UE capability of the allocation dependent tracking reference signal comprises at least one of the following for PDCCH reception for which the TRS is not needed:
- minimum required aggregation level;
- maximum bandwidth;
- maximum frequency separation of PDCCH allocation from SSB location in frequency.

According to an embodiment, the apparatus may comprise means for receiving an indication from the access node that said first and second transmission parameters for the configuration of the PDCCH and PDSCH are transmitted without a periodic TRS.

According to an embodiment, the apparatus may comprise means for monitoring PDSCH reception performance to determine whether a previous indicated capability for MCS needs to be updated; and means for triggering, in response to determining that a TRS for a MCS with lower than the previous indicated capability for the MCS is needed, a new RRC capability indication signaling with said lower MCS to the access node.

According to an embodiment, the apparatus may comprise means for monitoring PDSCH reception performance in relation to previously allocated bandwidth; and means for triggering, in response to determining that the performance on the previously allocated bandwidth is below a predetermined threshold value, a new RRC capability indication signaling with a lower bandwidth threshold for TRS allocation to the access node.

According to an embodiment, the apparatus may comprise means for monitoring PDSCH reception performance in relation to previously allocated frequency separation of PDSCH allocation from SSB location in frequency; and means for triggering, in response to determining that a lower frequency separation of PDSCH allocation from SSB location in frequency is needed, a new RRC capability indication signaling with said lower frequency separation to the access node.

An apparatus according to a second aspect comprises at least one processor and at least one memory, said at least one memory stored with computer program code thereon, the at least one memory and the computer program code configured to, with the at least one processor, cause the apparatus at least to perform: signal a UE capability of an allocation dependent tracking reference signal to an access node, said UE capability of the allocation dependent tracking reference signal comprising one or more capability parameters allowing to omit transmission of a periodical tracking reference signal, TRS; receive a Synchronization Signal Block, SSB, from the access node; perform time and frequency tracking and parameter estimation based on the SSB; receive a Physical Downlink Control Channel, PDCCH, data comprising first transmission parameters determined based on the UE capability of the allocation dependent tracking reference signal; determine a Physical Downlink Shared Channel, PDSCH, allocation for the UE based on the PDCCH data; receive PDSCH data comprising second transmission parameters determined based on the UE capability of the allocation dependent tracking reference signal; monitor performance of the PDSCH reception comprising transmission parameters determined based on the UE capability of the allocation dependent tracking reference signal; and initiate, in response to detecting the performance of the PDSCH reception being below at least one predetermined threshold, a radio resource control (RRC) capability indication signaling with the access node.

A method according to a third aspect comprises signaling a UE capability of an allocation dependent tracking reference signal to an access node, said UE capability of the allocation dependent tracking reference signal comprising one or more capability parameters allowing to omit transmission of a periodical tracking reference signal, TRS; receiving a Synchronization Signal Block, SSB, from the access node; performing time and frequency tracking and parameter estimation based on the SSB; receiving a Physical Downlink Control Channel, PDCCH, data comprising first transmission parameters determined based on the UE capability of the allocation dependent tracking reference signal; determining a Physical Downlink Shared Channel, PDSCH, allocation for the UE based on the PDCCH data; receiving PDSCH data comprising second transmission parameters determined based on the UE capability of the allocation dependent tracking reference signal; monitoring performance of the PDSCH reception comprising transmission parameters determined based on the UE capability of the allocation dependent tracking reference signal; and initiating, in response to detecting the performance of the PDSCH reception being below at least one predetermined threshold, a radio resource control (RRC) capability indication signaling with the access node..

Computer readable storage media according to further aspects comprise code for use by an apparatus, which when executed by a processor, causes the apparatus to perform the above methods.

### BRIEF DESCRIPTION OF THE DRAWINGS

For a more complete understanding of the example embodiments, reference is now made to the following descriptions taken in connection with the accompanying drawings in which:
Fig. 1 shows a schematic block diagram of an apparatus for incorporating the embodiments;
Fig. 2 shows schematically a layout of an apparatus according to an example embodiment;
Fig. 3 shows a part of an exemplifying radio access network;
Fig. 4 shows an example of radio beam alignment procedure between the gNB and the UE for both reception and transmission (Rx/Tx);
Fig. 5 shows configuration options for periodic TRS symbols;
Fig. 6 illustrates the QCL chain for the reception of PDCCH, PDSCH and CSI-RS in the TCI framework;
Fig. 7 shows a flow chart for a time and frequency tracking procedure according to an embodiment;
Fig. 8 shows a signalling diagram illustrating the method and some of the related embodiments;
Fig. 9 shows a flow chart depicting the operation of the UE upon PDSCH reception according to some embodiments;
Fig. 10 shows a flow chart depicting the operation of the UE upon PUSCH transmission according to some embodiments; and
Fig. 11 shows a flow chart depicting the operation of the UE according to yet another embodiment.

### DETAILED DESCRIPTON OF SOME EXAMPLE EMBODIMENTS

The following describes in further detail suitable apparatus and possible mechanisms carrying out the beam distribution. While the following focuses on 5G networks, the embodiments as described further below are by no means limited to be implemented in said networks only, but they are applicable in any network supporting beam distribution.

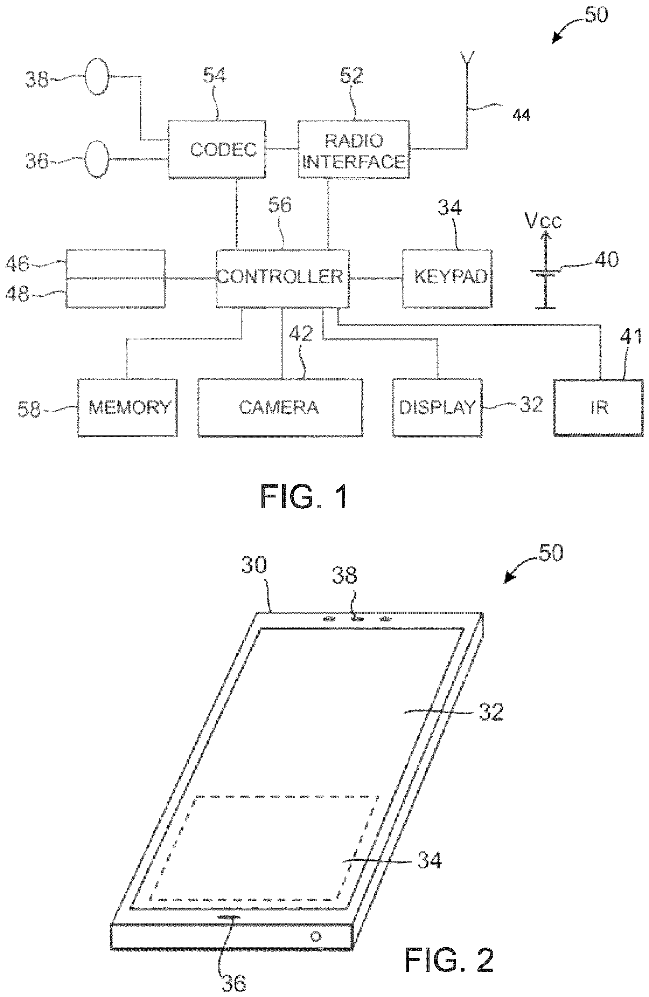

In this regard, reference is first made to Figures 1 and 2, where Figure 1 shows a schematic block diagram of an exemplary apparatus or electronic device 50, which may incorporate the arrangement according to the embodiments. Figure 2 shows a layout of an apparatus according to an example embodiment. The elements of Figs. 1 and 2 will be explained next.

The electronic device 50 may for example be a mobile terminal or user equipment of a wireless communication system. The apparatus 50 may comprise a housing 30 for incorporating and protecting the device. The apparatus 50 further may comprise a display 32 and a keypad 34. Instead of the keypad, the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device, such as anyone of: an earpiece 38, speaker, or an analogue audio or digital audio output connection. The apparatus 50 may also comprise a battery 40 (or the device may be powered by any suitable mobile energy device such as solar cell, fuel cell or clockwork generator). The apparatus may further comprise a camera 42 capable of recording or capturing images and/or video. The apparatus 50 may further comprise an infrared port 41 for short range line of sight communication to other devices. In other embodiments the apparatus 50 may further comprise any suitable short-range communication solution such as for example a Bluetooth wireless connection or a USB/firewire wired connection.

The apparatus 50 may comprise a controller 56 or processor for controlling the apparatus 50. The controller 56 may be connected to memory 58 which may store both user data and instructions for implementation on the controller 56. The memory may be random access memory (RAM) and/or read only memory (ROM). The memory may store computer-readable, computer-executable software including instructions that, when executed, cause the controller/processor to perform various functions described herein. In some cases, the software may not be directly executable by the processor but may cause a computer (e.g., when compiled and executed) to perform functions described herein. The controller 56 may further be connected to codec circuitry 54 suitable for carrying out coding and decoding of audio and/or video data or assisting in coding and decoding carried out by the controller.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In the following, different exemplifying embodiments will be described using, as an example of an access architecture to which the embodiments may be applied, a radio access architecture based on Long Term Evolution Advanced (LTE Advanced, LTE-A) or new radio (NR, 5G), without restricting the embodiments to such an architecture, however. A person skilled in the art appreciates that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet protocol multimedia subsystems (IMS) or any combination thereof.

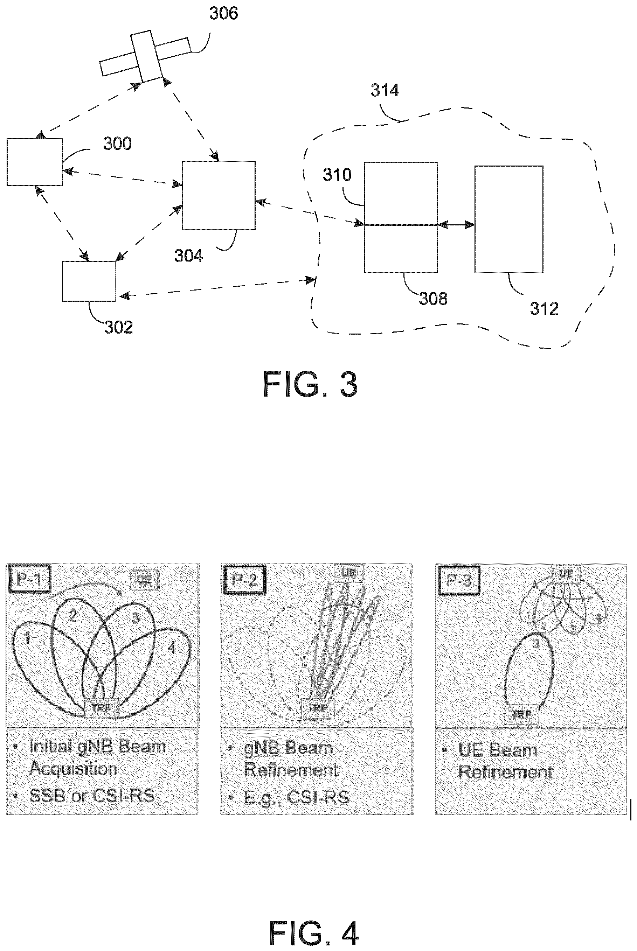

Figure 3 depicts examples of simplified system architectures only showing some elements and functional entities, all being logical units, whose implementation may differ from what is shown. The connections shown in Figure 3 are logical connections; the actual physical connections may be different. It is apparent to a person skilled in the art that the system typically comprises also other functions and structures than those shown in Figure 3. The embodiments are not, however, restricted to the system given as an example but a person skilled in the art may apply the solution to other communication systems provided with necessary properties.

The example of Figure 3 shows a part of an exemplifying radio access network.

Figure 3 shows user devices 300 and 302 configured to be in a wireless connection on one or more communication channels in a cell with an access node (such as (e/g)NodeB) 304 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 310 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. The CN may comprise network entities or nodes that may be referred to management entities. Examples of the network entities comprise at least an Access and Mobility Management Function (AMF).

The user device (also called a user equipment (UE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and an gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Accordingly, the user device may be an IoT-device. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. The access nodes of the radio network form transmission/reception (TX/Rx) points (TRPs), and the UEs are expected to access networks of at least partly overlapping multi-TRPs, such as macro-cells, small cells, pico-cells, femto-cells, remote radio heads, relay nodes, etc. The access nodes may be provided with Massive MIMO antennas, i.e. very large antenna array consisting of e.g. hundreds of antenna elements, implemented in a single antenna panel or in a plurality of antenna panels, capable of using a plurality of simultaneous radio beams for communication with the UE. The UEs may be provided with MIMO antennas having an antenna array consisting of e.g. dozens of antenna elements, implemented in a single antenna panel or in a plurality of antenna panels. Thus, the UE may access one TRP using one beam, one TRP using a plurality of beams, a plurality of TRPs using one (common) beam or a plurality of TRPs using a plurality of beams.

The 4G/LTE networks support some multi-TRP schemes, but in 5G NR the multi-TRP features are enhanced e.g. via transmission of multiple control signals via multi-TRPs, which enables to improve link diversity gain. Moreover, high carrier frequencies (e.g., mmWaves) together with the Massive MIMO antennas require new beam management procedures for multi-TRP technology.

5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

Frequency bands for 5G NR are separated into two frequency ranges: Frequency Range 1 (FR1) including sub-6 GHz frequency bands, i.e. bands traditionally used by previous standards, but also new bands extended to cover potential new spectrum offerings from 410 MHz to 7125 MHz, and Frequency Range 2 (FR2) including frequency bands from 24.25 GHz to 52.6 GHz. Thus, FR2 includes the bands in the mmWave range, which due to their shorter range and higher available bandwidth require somewhat different approach in radio resource management compared to bands in the FR1.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 312, or utilize services provided by them. The communication network may also be able to support the usage of cloud services, for example at least part of core network operations may be carried out as a cloud service (this is depicted in Fig. 3 by "cloud" 314). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU) and non-real time functions being carried out in a centralized manner (in a centralized unit, CU 308).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize non-terrestrial nodes 306, e.g. access nodes, to enhance or complement the coverage of 5G service, for example by providing backhauling, wireless access to wireless devices, service continuity for machine-to-machine (M2M) communication, service continuity for Internet of Things (IoT) devices, service continuity for passengers on board of vehicles, ensuring service availability for critical communications and/or ensuring service availability for future railway/maritime/aeronautical communications. The non-terrestrial nodes may have fixed positions with respect to the Earth surface or the non-terrestrial nodes may be mobile non-terrestrial nodes that may move with respect to the Earth surface. The non-terrestrial nodes may comprise satellites and/or HAPSs. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node 304 or by a gNB located on-ground or in a satellite.

A person skilled in the art appreciates that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

The Radio Resource Control (RRC) protocol is used in various wireless communication systems for defining the air interface between the UE and a base station, such as eNB/gNB. This protocol is specified by 3GPP in in TS 36.331 for LTE and in TS 38.331 for 5G. In terms of the RRC, the UE may operate in LTE and in 5G in an idle mode or in a connected mode, wherein the radio resources available for the UE are dependent on the mode where the UE at present resides. In 5G, the UE may also operate in inactive mode. In the RRC idle mode, the UE has no connection for communication, but the UE is able to listen to page messages. In the RRC connected mode, the UE may operate in different states, such as CELL_DCH (Dedicated Channel), CELL_FACH (Forward Access Channel), CELL_PCH (Cell Paging Channel) and URA_PCH (URA Paging Channel). The UE may communicate with the eNB/gNB via various logical channels like Broadcast Control Channel (BCCH), Paging Control Channel (PCCH), Common Control Channel (CCCH), Dedicated Control Channel (DCCH), Dedicated Traffic Channel (DTCH).

The transitions between the states is controlled by a state machine of the RRC. When the UE is powered up, it is in a disconnected mode/idle mode. The UE may transit to RRC connected mode with an initial attach or with a connection establishment. If there is no activity from the UE for a short time, eNB/gNB may suspend its session by moving to RRC Inactive and can resume its session by moving to RRC connected mode. The UE can move to the RRC idle mode from the RRC connected mode or from the RRC inactive mode.

The actual user and control data from network to the UEs is transmitted via downlink physical channels, which in 5G include Physical downlink control channel (PDCCH) which carries the necessary downlink control information (DCI), Physical Downlink Shared Channel (PDSCH), which carries the user data and system information for user, and Physical broadcast channel (PBCH), which carries the necessary system information to enable a UE to access the 5G network.

The user and control data from UE to the network is transmitted via uplink physical channels, which in 5G include Physical Uplink Control Channel (PUCCH), which is used for uplink control information including HARQ feedback acknowledgments, scheduling request, and downlink channel-state information for link adaptation, Physical Uplink Shared Channel (PUSCH), which is used for uplink data transmission, and Physical Random Access Channel (PRACH), which is used by the UE to request connection setup referred to as random access.

For the 5G technology, one of the most important design goals has been improved metrics of reliability and latency, in addition to network resilience and flexibility.

Especially when considering the operating of the UE in the Frequency Range 2 (FR2; 24.25 GHz to 52.6 GHz) including the mmWave range, the UE implementation is expected to have multiple antenna panels (Multi-Panel UE, MPUE) to perform beam steering over a large solid angle aiming to maximize the reliability.

Beam Management defines a set of functionalities to assist the UE to set its reception and transmission (RX/TX) beams for downlink receptions and uplink transmissions, respectively. In NR, the beam management for both downlink and uplink is network controlled, including triggering of the beam reports from the UE. The functionalities of the beam management can be categorized roughly according to four groups:
1. Beam Indication
   - Assist the UE to set its RX and TX beam properly for the reception of DL and transmission of UL, respectively.
2. Beam Acquisition, Measurements and Reporting
   - Procedures for providing the gNB knowledge about feasible DL and UL beams for the UE.
3. Beam Recovery
   - For rapid link reconfiguration against sudden blockages, i.e. fast re-alignment of the gNB and the UE beams.
4. Beam Tracking and Refinement
   - Set of procedures to refine the gNB and the UE side beams.

Regarding downlink beam management and especially for Beam Acquisition, Measurements and Reporting, the following beam management procedures P-1, P-2 and P-3 as identified in Figure 4 are supported within one or multiple TRPs of the serving cell:
a) P-1 is used to enable UE measurement on different TRP Tx beams to support selection of TRP Tx beams/UE Rx beam(s)
   - For beamforming at TRP, it typically includes an intra/inter-TRP Tx beam sweep from a set of different beams. For beamforming at UE, it typically includes a UE Rx beam sweep from a set of different beams.
b) P-2 is used to enable UE measurement on different TRP Tx beams to possibly change inter/intra-TRP Tx beam(s)
   - P-2 may be performed from a possibly smaller set of beams for beam refinement than in P-1. It is noted that P-2 can be a special case of P-1.
c) P-3 is used to enable UE measurement on the same TRP Tx beam to change UE Rx beam in the case UE uses beamforming.

For a UE to be able to operate in RRC Connected mode, said UE must periodically perform beam management related operations, such as channel state information reference signals/ synchronization signal blocks (CSI-RS/SSB) measurements, as well as to report periodically the result of these measurements to the network.

The UE may be configured with multiple beam configurations across panels and needs to align its narrow beams. The UE relies on the reference signals associated with *NZP-CSI-RS-ResourceSet* information element, defined in 3GPP TS38.214.

Regarding downlink beam indication, a quasi-colocation (QCL) indication functionality has been defined. The principle to receive certain physical signal or physical channel is: the UE is either configured with or the UE implicitly determines a source/reference signal (RS) that UE has received and measured earlier, which defines how to set RX beam for the reception of the downlink (target) physical signal or channel to be received. To provide the UE with QCL characteristics for the target signal (to be received), a Transmission Configuration Indication (TCI) framework has been defined using which the UE can be configured with TCI state(s) so as to provide the UE with source RS(s) for determining QCL characteristics. Each TCI state includes one or two source RSs that provide the UE QCL with TypeA, TypeB, TypeC and/or TypeD parameters. Different types provide the parameters as follows:
- QCL-TypeA: {Doppler shift, Doppler spread, average delay, delay spread}
- QCL-TypeB: {Doppler shift, Doppler spread}
- QCL-TypeC: {Doppler shift, average delay}
- QCL-TypeD: {Spatial Rx parameter}

In uplink, the UE is provided with a parameter called spatial relation info providing a spatial source RS, based on which the UE determines the uplink transmit beam. The spatial source RS can be DL RS (SSB or CSI-RS) or UL RS (SRS). For each PUCCH and SRS resource, the gNB provides explicitly spatial source while for PUSCH, an indirect indication is provided:
- PUSCH scheduled using DCI format 0_0, the spatial source is the same as with a certain PUCCH resource
- PUSCH scheduled using DCI format 0_1, the spatial source is the same as indicated SRS resource(s)
   ∘ One SRS resource indicated in codebook based transmission scheme
   ∘ One or multiple SRS resources indicated in non-codebook based transmission scheme

Rel17 introduced a unified TCI framework, meaning that the TCI states used so far for providing QCL assumptions for the reception of DL signals and channels would also be used to provide spatial sources for the transmission of UL signals and channels to determine UL TX spatial filter. Furthermore, the unified TCI framework defines the concept of indicated TCI state, meaning that one or multiple (in case of multi-TRP for instance) of the configured TCI states is/are indicated TCI state(s) at a time. The indicated TCI state can be joint DL and UL TCI state or separate DL and separate UL TCI states. The indicated TCI state provides QCL source (DL) and spatial source (UL) for the set of downlink signals and channels and for the set of uplink signals and channels, respectively. According to Rel17, there can be one indicated joint DL and UL TCI state, or one indicated DL TCI state and one indicated UL TCI state for the UE.

Rel18 further extends the unified TCI framework so that there can be multiple indicated DL and UL TCI states.

For the time and frequency domain parameter estimation to set the channel estimator parameters properly for the reception of the PDCCH, PDSCH and CSI-RS, the UE is configured to receive periodical tracking reference signal (TRS). TRS is configured UE-specifically to enable the UE to perform fine time and frequency synchronization tracking in the serving cell. The TRS facilitates UE to perform the parameter optimization for a channel estimator, e.g. the length of 2-D Wiener filter over frequency and time. TRS is configured as one-port CSI-RS resource(s) with the following parameters:
- TRS burst length is two consecutive valid downlink slots in FR1 and one or two consecutive valid downlink slots in FR2
- In each slot there are two TRS symbols
- TRS symbols in the slot have a four-symbol separation
- TRS burst periodicity is either 10, 20, 40 or 80 ms.

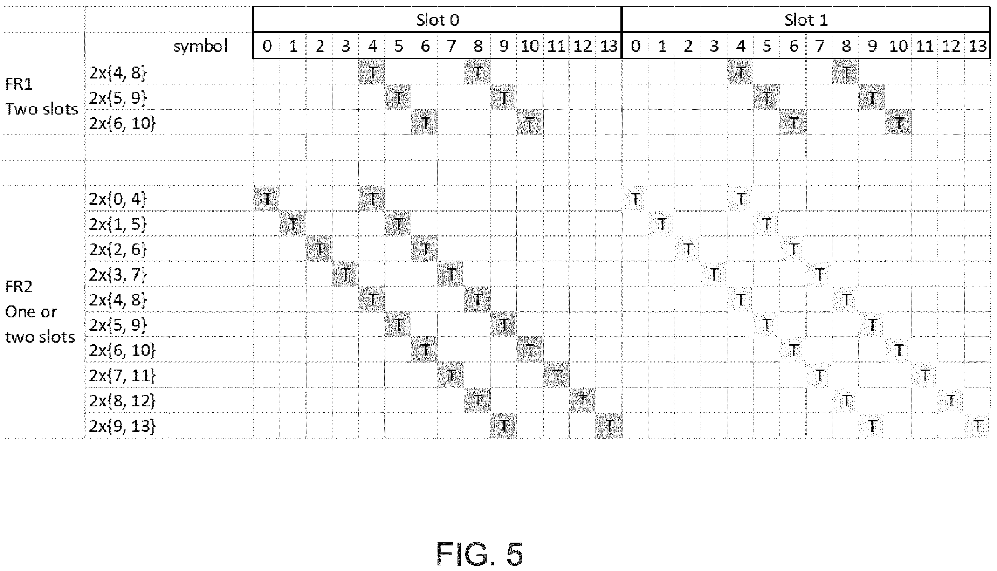

The above configuration options for TRS symbols are illustrated in Figure 5.

The UE may be configured for multiple TRS configurations to receive TRS and keep tracking time and frequency domain parameters for the channel estimators e.g. from different TRPs / TX beams.

The TRS is configured separately for each UE. According to 3GPP TS 38.214, there can be an additional aperiodic TRS, but it nevertheless has always a periodical TRS associated with it. The periodic TRS may also be implemented using semi-persistent TRS resource (set) configuration, where the periodic transmission can be momentarily suspended.

Moreover, 3GPP TS 38.214 defines that for the reception of the CSI-RS, PDCCH and PDSCH, TRS is the main QCL source reference signal for the UE, defined according to the QCL Types A - D:
"For a CSI-RS resource in an NZP-CSI-RS-ResourceSet configured without higher layer parameter trs-Info and without the higher layer parameter repetition, the UE shall expect that a TCI-State indicates one of the following quasi co-location type(s):
   - 'typeA' with a CSI-RS resource in a NZP-CSI-RS-ResourceSet configured with higher layer parameter trs-Info and, when applicable, 'typeD' with the same CSI-RS resource, or
   - 'typeA' with a CSI-RS resource in a NZP-CSI-RS-ResourceSet configured with higher layer parameter trs-Info and, when applicable, 'typeD' with an SS/PBCH block, where SS/PBCH block may have a PCI different from the PCI of the serving cell. The UE can assume center frequency, SCS, SFN offset are the same for SS/PBCH block from the serving cell and SS/PBCH block having a PCI different from the serving cell, or
   - 'typeA' with a CSI-RS resource in a NZP-CSI-RS-ResourceSet configured with higher layer parameter trs-Info and, when applicable, 'typeD' with a CSI-RS resource in a NZP-CSI-RS-ResourceSet configured with higher layer parameter repetition, or
   - 'typeB' with a CSI-RS resource in a NZP-CSI-RS-ResourceSet configured with higher layer parameter trs-Info when 'typeD' is not applicable.
      ...
For the DM-RS of PDCCH, if the UE is not configured with dl-OrJoint-TCIStateList, the UE shall expect that a TCI-State indicates one of the following quasi co-location type(s):
   - 'typeA' with a CSI-RS resource in a NZP-CSI-RS-ResourceSet configured with higher layer parameter trs-Info and, when applicable, 'typeD' with the same CSI-RS resource, or
   - 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition, or
   - 'typeA' with a CSI-RS resource in a NZP-CSI-RS-ResourceSet configured without higher layer parameter trs-Info and without higher layer parameter repetition and, when applicable, 'typeD' with the same CSI-RS resource.
      ...
For the DM-RS of PDSCH, if the UE is not configured with dl-OrJoint-TCIStateList, the UE shall expect that a TCI-State indicates one of the following quasi co-location type(s):
   - 'typeA' with a CSI-RS resource in a NZP-CSI-RS-ResourceSet configured with higher layer parameter trs-Info and, when applicable, 'typeD' with the same CSI-RS resource, or
   - 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition,or
   - typeA' with a CSI-RS resource in a NZP-CSI-RS-ResourceSet configured without higher layer parameter trs-Info and without higher layer parameter repetition and, when applicable, 'typeD' with the same CSI-RS resource."

Rel17 introduced a so-called common tracking reference signal (TRS) that can be detected and used by UEs also in IDLE or INACTIVE mode in order to update channel estimation filter parameters, such as average delay, delay spread, doppler shift and doppler spread according to the QCL Types A - D.

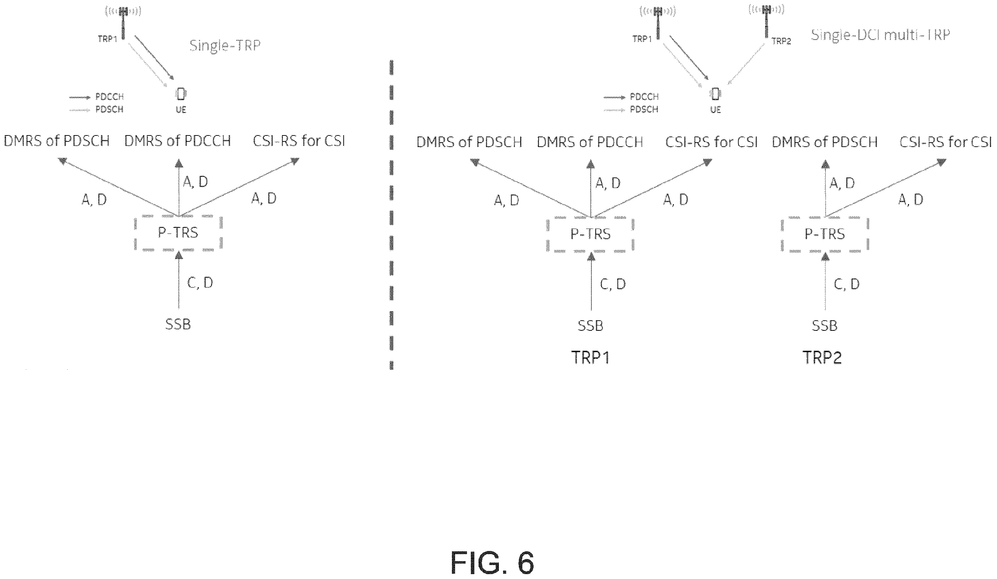

Figure 6 illustrates the QCL chain for the reception of PDCCH, PDSCH and CSI-RS in the TCI framework, as defined above. Figure 6 shows the different options for the single-TRP case and the multi-TRP case with single downlink control information (DCI). Letters A - D in Figure 6 refer to the QCL Types A - D. SSB (Synchronization Signal Block) serves as the synchronization and PBCH block in 5G/NR. Accordingly, SSB comprises primary and secondary synchronization signals, and PBCH and DMRS for PBCH demodulation. The TRS is deduced from the SSB, and QCL Types are indicated for the Demodulation Reference Signals (DMRS) of PDCCH and PDSCH and for the CSI-RS for CSI.

In 5G/NR, SSB has the default periodicity of 20 ms. Consequently, the periodic SSB and thus the periodic TRS (P-TRS) form the basis for the QCL chain. However, such UE specific periodic TRS imposes high system overhead. Furthermore, periodic signal and channel transmissions are inevitably inefficient in terms of energy consumption, and thus they should be minimized.

In the following, an enhanced method for time and frequency tracking and synchronization will be described in more detail, in accordance with various embodiments.

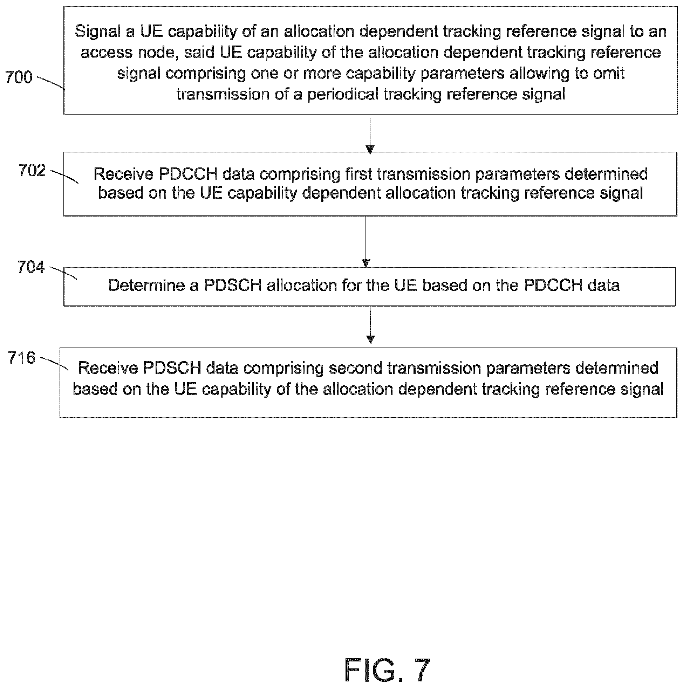

The method, which is disclosed in flow chart of Figure 7 as reflecting the operation of a terminal apparatus, such as a user equipment (UE), wherein the method comprises signaling (700), by a UE, a UE capability of an allocation dependent tracking reference signal to an access node, said UE capability of the allocation dependent tracking reference signal comprising one or more capability parameters allowing to omit transmission of a periodical tracking reference signal, TRS; receiving (702) a Physical Downlink Control Channel, PDCCH, data comprising first transmission parameters determined based on the UE capability of the allocation dependent tracking reference signal; determining (704) a Physical Downlink Shared Channel, PDSCH, allocation for the UE based on the PDCCH data; and receiving

(706) PDSCH data comprising second transmission parameters determined based on the UE capability of the allocation dependent tracking reference signal.

Thus, the UE may signal a minimum set of parameters that are needed by the UE to perform fine time and frequency synchronization tracking in the serving cell so as to avoid transmission of a periodical TRS. The signaling, which may be referred to as a UE capability of an allocation dependent tracking reference signal, comprises the minimum set of parameters for determining channel parameters for at least PDCCH and/or PDSCH reception. Consequently, when the transmission parameters for the reception of PDCCH and PDSCH are within the limits indicated in the UE capability of the allocation dependent TRS, there is no need for the periodic TRS.

According to an embodiment, the method further comprises receiving a Synchronization Signal and PBCH Block, SSB, from the access node; performing time and frequency tracking and parameter estimation based on the SSB.

Thus, the time and frequency tracking and parameter estimation may be performed based on the received SSB only.

According to an embodiment, the method further comprises receiving a Physical Uplink Shared Channel, PUSCH, grant comprising third transmission parameters determined based on the UE capability of the allocation dependent tracking reference signal; and determining a PUSCH allocation for the UE based on the PUSCH grant.

Hence, the UE capability of the allocation dependent tracking reference signal may also serve as a basis for determining transmission parameters for PUSCH, and upon receiving the determined transmission parameters, the UE may determine the PUSCH allocation for the UE. Herein, the PUSCH grant may refer e.g. to scheduling of PUSCH transmission, configuration of PUSCH transmission or activation of PUSCH transmission or a DCI/PDCCH allocating a PUSCH transmission.

According to an embodiment, the method further comprises indicating, in the UE capability of the allocation dependent tracking reference signal, allowed transmission conditions and parameters for the PDCCH and PDSCH for which the UE needs only an aperiodic TRS before reception of PDCCH and PDSCH.

Thus, the UE capability of the allocation dependent tracking reference signal may indicate, for example, the allowed transmissions conditions and parameters for the PDCCH and PDSCH that could be provided to the UE in one or more aperiodic TRS(s) only before the reception of PDCCH and PDSCH. Hence, the capability parameters needed by the UE for the PDCCH and PDSCH configuration, may comprise the allowed transmissions conditions and parameters, determined by the UE, as received in one or more aperiodic TRS(s) only, wherein there is no need for the periodic TRS.

According to an embodiment, the method further comprises indicating minimum required TRS transmission periodicity for said PDCCH and PDSCH transmission parameters.

Despite of the capability to receive the parameters needed by the UE for the PDCCH and PDSCH configuration in an aperiodic TRS only, the system reliability may nevertheless require that periodic TRS(s) are sent at certain intervals. However, the UE may indicate a maximum transmission interval for said PDCCH and PDSCH transmission parameters to be received in an aperiodic TRS, wherein if said condition is met, the transmission of a periodic TRS may be further postponed.

According to an embodiment, the method further comprises indicating maximum limits for the transmission parameters related to the PUSCH allowing to omit the transmission of the periodical TRS.

Hence, similarly to the transmission conditions and parameters for the PDCCH and PDSCH, the UE capability of the allocation dependent tracking reference signal may indicate, for example, the maximum limits for the parameters for the PUSCH that could be provided to the UE in one or more aperiodic TRS(s) only so as to configure the transmission on the PUSCH. Accordingly, the capability parameters needed by the UE for the PUSCH configuration, may comprise the allowed transmissions conditions and parameters, i.e. their maximum limits, determined by the UE, as received in one or more aperiodic TRS(s) only, wherein there is no need for the periodic TRS.

According to an embodiment, the UE capability of the allocation dependent tracking reference signal comprises at least one of the following for PDSCH reception for which the TRS is not needed:
- maximum modulation and coding scheme (MCS);
- maximum rank;
- maximum bandwidth;
- maximum frequency separation of PDSCH allocation from SSB location in frequency.

According to an embodiment, UE capability of the allocation dependent tracking reference signal comprises at least one of the following for PDCCH reception for which the TRS is not needed:
- minimum required aggregation level;
- maximum bandwidth;
- maximum frequency separation of PDCCH allocation from SSB location in frequency.

According to an embodiment, the method further comprises receiving an indication from the access node that said first and second transmission parameters for the configuration of the PDCCH and PDSCH are transmitted without a periodic TRS.

Thus, after determining that the parameters for the configuration of the PDCCH and PDSCH may be determined based on what is indicated in the UE capability of the allocation dependent tracking reference signal sent by the UE, the access node may inform the UE that there will be no periodic TRS allocated for the provision of the parameters for the configuration of the PDCCH and PDSCH.

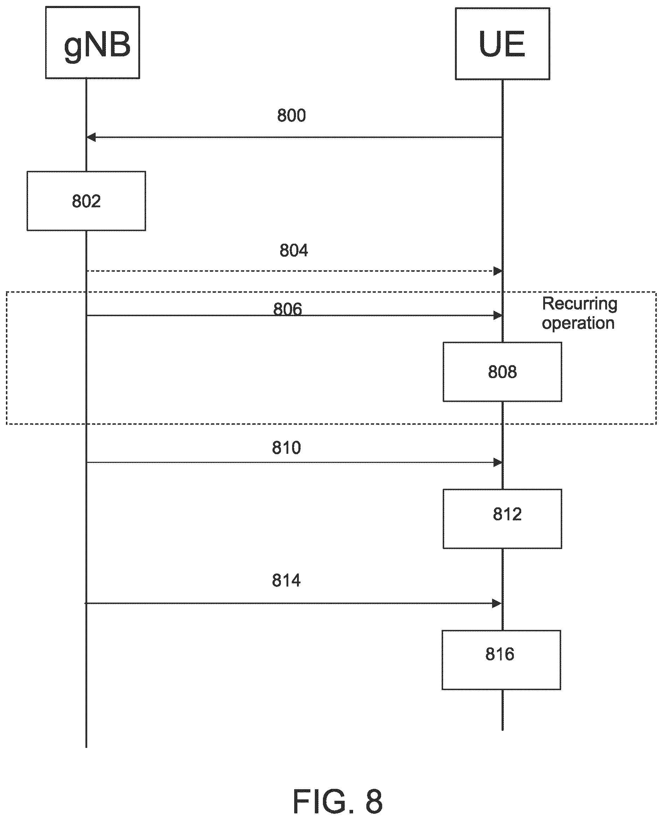

Figure 8 shows a signalling diagram illustrating the method and some of the related embodiments. It is noted that the method and the related embodiments are suitable for the forthcoming 6G networks and radio systems, including access nodes (6gNB) and user equipment (UE), where one of the design principles is improving the energy efficiency of the previous radio systems. It is nevertheless noted that the method and the related embodiments are equally applicable to any existing or forthcoming radio system.

The UE sends (800) the UE capability of the allocation dependent tracking reference signal to the access node (gNB). The UE capability of the allocation dependent tracking reference signal may comprise at least one parameter for PDSCH reception for which the periodic TRS is not needed and at least one parameter for PDCCH reception for which the periodic TRS is not needed. The UE capability of the allocation dependent tracking reference signal may comprise, for example, at least one of maximum the MCS, maximum rank, maximum bandwidth and maximum frequency separation of PDSCH allocation from SSB location in frequency, and at least one of minimum required aggregation level, maximum bandwidth and maximum frequency separation of PDCCH allocation from SSB location in frequency.

The gNB determines (802) that the parameters for the configuration of the PDCCH and PDSCH may be determined based on what is indicated in the UE capability of the allocation dependent tracking reference signal sent by the UE. The gNB may optionally send (804) an indication to the UE that there will be no periodic TRS allocated for the provision of the parameters for the configuration of the PDCCH and PDSCH.

The gNB sends (806) a Synchronization Signal Block, SSB, to the UE, which performs (808) time and frequency tracking and parameter estimation based on the SSB. It is noted that the steps 806 and 808 are performed as recurring operation, wherein said steps may be repeated a plurality of times before the following steps.

The gNB sends (810) a PDCCH signaling comprising transmission parameters determined based on the UE capability of the allocation dependent tracking reference signal. The UE demodulates the received PDCCH signaling and determines (812) the PDSCH allocation for the UE. The gNB initiates (814) the PDSCH signaling comprising transmission parameters determined based on the UE capability of the allocation dependent tracking reference signal. The UE has already determined the PDSCH allocation and thus the UE may demodulate (816) the received PDSCH signaling.

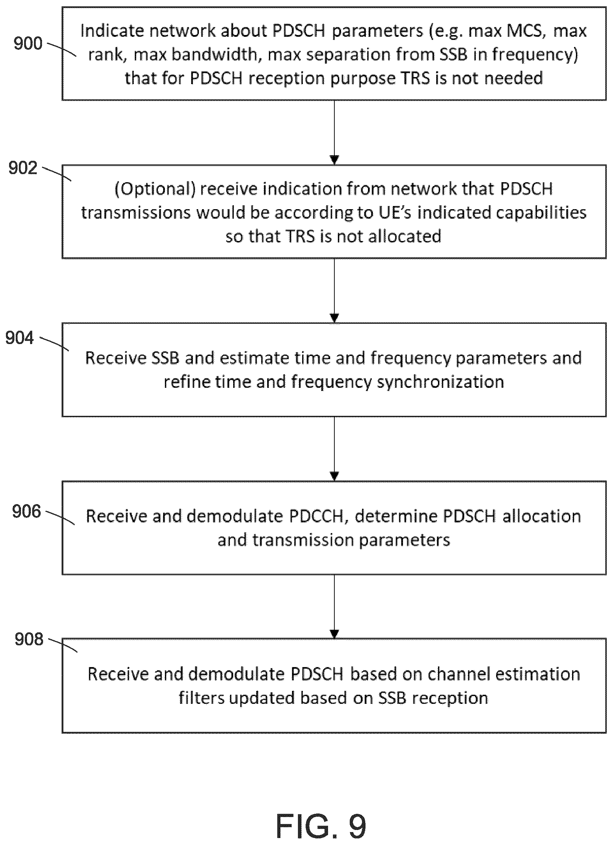

Figure 9 shows a flow chart depicting the operation of the UE upon PDSCH reception according to some embodiments. The UE may indicate (900), e.g. by signaling in the UE capability of the allocation dependent tracking reference signal, one or more PDSCH parameters allowing to omit transmission of the periodical TRS to an access node. The UE may optionally receive (902) an indication that there will be no periodic TRS allocated for the provision of the parameters for the configuration of the PDSCH. The UE receives (904) an SSB from the access node and carries out time and frequency tracking and parameter estimation based on the SSB, e.g. updating channel estimation filters. The UE receives (906) and demodulates the PDCCH signaling and determines the PDSCH allocation and PDSCH transmission parameters based on the PDCCH signaling. The UE then receives (908) and demodulates the PDSCH signaling using channel estimation filters updated based on the SSB.

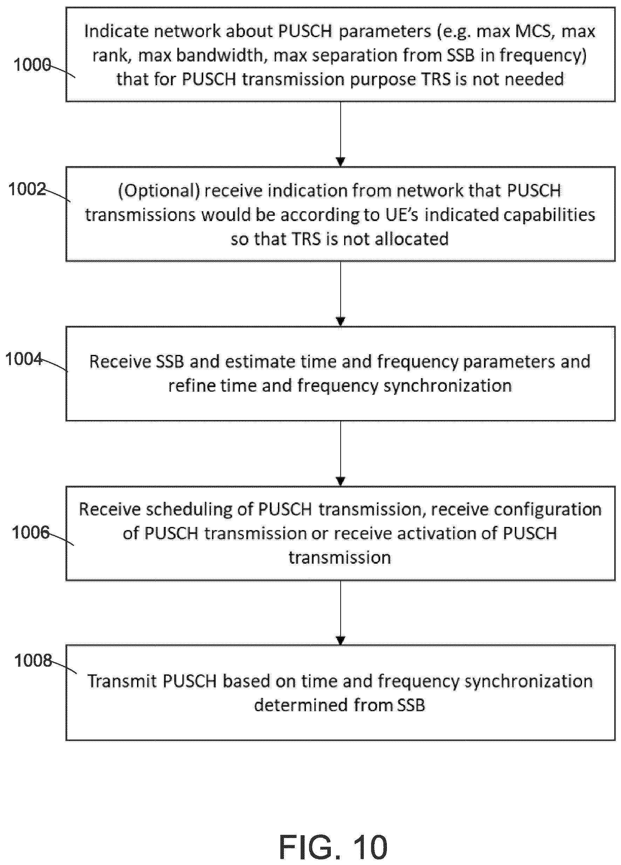

Figure 10 shows a flow chart depicting the operation of the UE upon PUSCH transmission according to some embodiments. The UE may indicate (1000), e.g. by signaling in the UE capability of the allocation dependent tracking reference signal, one or more PUSCH parameters allowing to omit transmission of the periodical TRS to an access node. The UE may optionally receive (1002) an indication that there will be no periodic TRS allocated for the provision of the parameters for the configuration of the PUSCH. The UE receives (1004) an SSB from the access node and carries out time and frequency tracking and parameter estimation based on the SSB. The UE receives (1006) a scheduling, a configuration or an activation for the PUSCH transmissions. The UE then initiates PUSCH transmission (1008) using the time and frequency synchronization based on the SSB.

Some embodiments relating to the UE monitoring the performance of the PDSCH reception, which has been configured with the transmission parameters determined based on the previously provided UE capability of the allocation dependent tracking reference signal are described hereinbelow. It is noted that these embodiments may be carried out either independently of the above embodiments or in combination of any of the above embodiments.

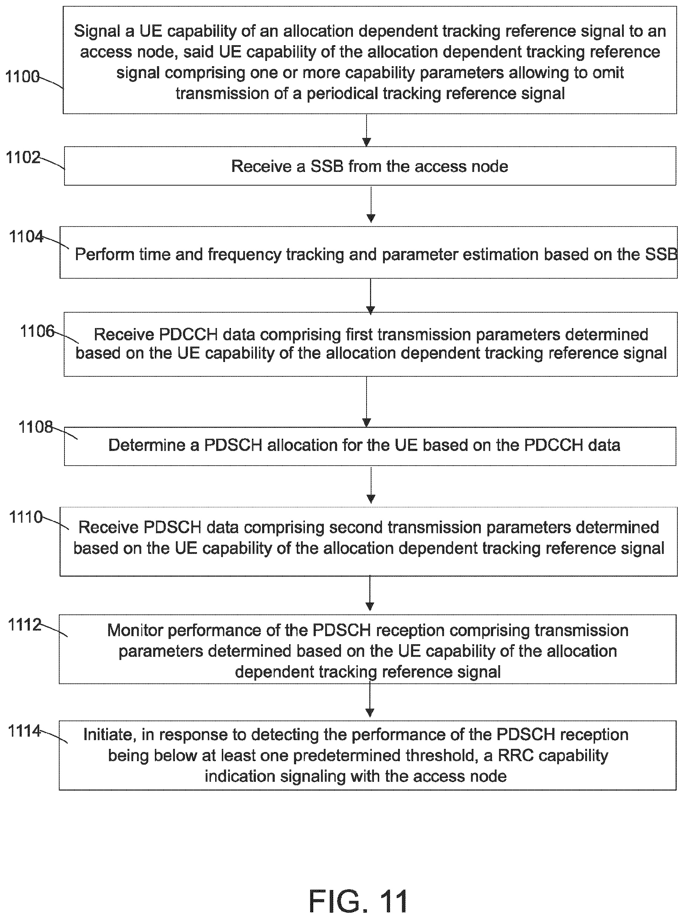

Thus, a method according to another aspect, as shown in the flow chart of Figure 11 as reflecting the operation of a terminal apparatus, such as a user equipment (UE), comprising signaling (1100), by a UE, a UE capability of an allocation dependent tracking reference signal to an access node, said UE capability of the allocation dependent tracking reference signal comprising one or more capability parameters allowing to omit transmission of a periodical tracking reference signal; receiving (1102) a Synchronization Signal Block, SSB, from the access node; performing (1104) time and frequency tracking and parameter estimation based on the SSB; receiving (1106) a Physical Downlink Control Channel, PDCCH, data comprising first transmission parameters determined based on the UE capability of the allocation dependent tracking reference signal; determining (1108) a Physical Downlink Shared Channel, PDSCH, allocation for the UE based on the PDCCH data; receiving (1110) PDSCH data comprising second transmission parameters determined based on the UE capability of the allocation dependent tracking reference signal; monitoring (1112) performance of the PDSCH reception comprising transmission parameters determined based on the UE capability of the allocation dependent tracking reference signal; and initiating

(1114), in response to detecting the performance of the PDSCH reception being below at least one predetermined threshold, a radio resource control (RRC) capability indication signaling with the access node.

Thus, after having the PDSCH transmission parameters determined based on the UE capability of the allocation dependent tracking reference signal, i.e. to be transmitted without a periodic TRS, the UE may continuously monitor whether the indicated parameters still provide sufficiently good performance of the PDSCH reception. There may be many underlying reasons for the performance to degrade, such as mobility or location of the UE, blockage or reflections of the signal path, network congestion, etc. If the UE notices that regarding at least one predetermined threshold the performance of the PDSCH reception drops too low, the UE may initiate an RRC capability indication signaling with the access node to update the PDSCH transmission parameters on acceptable level.

According to an embodiment, the method further comprises monitoring PDSCH reception performance to determine whether a previous indicated capability for MCS needs to be updated; and in response to determining that a TRS for a MCS with lower than the previous indicated capability for the MCS is needed, triggering a new RRC capability indication signaling with said lower MCS to the access node.

Thus, the UE may notice that the previously indicated capability for modulation and coding scheme (MCS) does not provide an acceptable level of PDSCH reception performance. Therefore, the RRC capability indication signaling with the access node is initiated to update the PDSCH transmission parameters to include a lower MCS.

According to an embodiment, the method further comprises monitoring PDSCH reception performance in relation to previously allocated bandwidth; and in response to determining that the performance on the previously allocated bandwidth is below a predetermined threshold value, triggering a new RRC capability indication signaling with a lower bandwidth threshold for TRS allocation to the access node.

Herein, the UE may notice that the previously allocated bandwidth is too high to provide an acceptable level of PDSCH reception performance. Therefore, the RRC capability indication signaling with the access node is initiated to update the PDSCH transmission parameters to include a lower bandwidth.

According to an embodiment, the method further comprises monitoring PDSCH reception performance in relation to previously allocated frequency separation of PDSCH allocation from SSB location in frequency; and in response to determining that a lower frequency separation of PDSCH allocation from SSB location in frequency is needed, triggering a new RRC capability indication signaling with said lower frequency separation to the access node.

Accordingly, the UE may notice that the previously allocated frequency separation of PDSCH allocation from SSB location in frequency is too wide to provide an acceptable level of PDSCH reception performance. Therefore, the RRC capability indication signaling with the access node is initiated to update the PDSCH transmission parameters to include a lower frequency separation of PDSCH allocation from SSB location.

An apparatus, such as a UE, according to an aspect comprises means for signaling a UE capability of an allocation dependent tracking reference signal to an access node, said UE capability of the allocation dependent tracking reference signal comprising one or more capability parameters allowing to omit transmission of a periodical tracking reference signal, TRS; means for receiving a Synchronization Signal Block, SSB, from the access node; means for performing time and frequency tracking and parameter estimation based on the SSB; means for receiving a Physical Downlink Control Channel, PDCCH, data comprising first transmission parameters determined based on the UE capability of the allocation dependent tracking reference signal; means for determining a Physical Downlink Shared Channel, PDSCH, allocation for the UE based on the PDCCH data; means for receiving PDSCH data comprising second transmission parameters determined based on the UE capability of the allocation dependent tracking reference signal; means for monitoring performance of the PDSCH reception comprising transmission parameters determined based on the UE capability of the allocation dependent tracking reference signal; and means for initiating, in response to detecting the performance of the PDSCH reception being below at least one predetermined threshold, a radio resource control (RRC) capability indication signaling with the access node.

According to an embodiment, the apparatus may comprise means for indicating, in the UE capability of the allocation dependent tracking reference signal, allowed transmission conditions and parameters for the PDCCH and PDSCH for which the UE needs only an aperiodic TRS before reception of PDCCH and PDSCH.

According to an embodiment, the apparatus may comprise means for indicating minimum required TRS transmission periodicity for said PDCCH and PDSCH transmission parameters.

According to an embodiment, the apparatus may comprise means for receiving a Physical Uplink Shared Channel, PUSCH, grant comprising third transmission parameters determined based on the UE capability of the allocation dependent tracking reference signal; and means for determining a PUSCH allocation for the UE based on the PUSCH grant.

According to an embodiment, the apparatus may comprise means for indicating maximum limits for the transmission parameters related to the PUSCH allowing to omit the transmission of the periodical TRS.

According to an embodiment, the UE capability of the allocation dependent tracking reference signal comprises at least one of the following for PDSCH reception for which the TRS is not needed:
- maximum modulation and coding scheme (MCS);
- maximum rank;
- maximum bandwidth;
- maximum frequency separation of PDSCH allocation from SSB location in frequency.

According to an embodiment, the UE capability of the allocation dependent tracking reference signal comprises at least one of the following for PDCCH reception for which the TRS is not needed:
- minimum required aggregation level;
- maximum bandwidth;
- maximum frequency separation of PDCCH allocation from SSB location in frequency.

According to an embodiment, the apparatus may comprise means for receiving an indication from the access node that said first and second transmission parameters for the configuration of the PDCCH and PDSCH are transmitted without a periodic TRS.

According to an embodiment, the apparatus may comprise means for monitoring PDSCH reception performance to determine whether a previous indicated capability for MCS needs to be updated; and means for triggering, in response to determining that a TRS for a MCS with lower than the previous indicated capability for the MCS is needed, a new RRC capability indication signaling with said lower MCS to the access node.

According to an embodiment, the apparatus may comprise means for monitoring PDSCH reception performance in relation to previously allocated bandwidth; and means for triggering, in response to determining that the performance on the previously allocated bandwidth is below a predetermined threshold value, a new RRC capability indication signaling with a lower bandwidth threshold for TRS allocation to the access node.

According to an embodiment, the apparatus may comprise means for monitoring PDSCH reception performance in relation to previously allocated frequency separation of PDSCH allocation from SSB location in frequency; and means for triggering, in response to determining that a lower frequency separation of PDSCH allocation from SSB location in frequency is needed, a new RRC capability indication signaling with said lower frequency separation to the access node.

An apparatus according to a further aspect comprises at least one processor and at least one memory, said at least one memory stored with computer program code thereon, the at least one memory and the computer program code configured to, with the at least one processor, cause the apparatus at least to perform: signal a UE capability of an allocation dependent tracking reference signal to an access node, said UE capability of the allocation dependent tracking reference signal comprising one or more capability parameters allowing to omit transmission of a periodical tracking reference signal, TRS; receive a Synchronization Signal Block, SSB, from the access node; perform time and frequency tracking and parameter estimation based on the SSB; receive a Physical Downlink Control Channel, PDCCH, data comprising first transmission parameters determined based on the UE capability of the allocation dependent tracking reference signal; determine a Physical Downlink Shared Channel, PDSCH, allocation for the UE based on the PDCCH data; receive PDSCH data comprising second transmission parameters determined based on the UE capability of the allocation dependent tracking reference signal; monitor performance of the PDSCH reception comprising transmission parameters determined based on the UE capability of the allocation dependent tracking reference signal; and initiate, in response to detecting the performance of the PDSCH reception being below at least one predetermined threshold, a radio resource control (RRC) capability indication signaling with the access node.

According to an embodiment, the apparatus may comprise computer program code configured to cause the apparatus to indicate, in the UE capability of the allocation dependent tracking reference signal, allowed transmission conditions and parameters for the PDCCH and PDSCH for which the UE needs only an aperiodic TRS before reception of PDCCH and PDSCH.

According to an embodiment, the apparatus may comprise computer program code configured to cause the apparatus to indicate minimum required TRS transmission periodicity for said PDCCH and PDSCH transmission parameters.

According to an embodiment, the apparatus may comprise computer program code configured to cause the apparatus to receive a Physical Uplink Shared Channel, PUSCH, grant comprising third transmission parameters determined based on the UE capability dependent allocation tracking reference signal; and determine a PUSCH allocation for the UE based on the PUSCH grant.

According to an embodiment, the apparatus may comprise computer program code configured to cause the apparatus to indicate maximum limits for the transmission parameters related to the PUSCH allowing to omit the transmission of the periodical TRS.

According to an embodiment, the UE capability of the allocation dependent tracking reference signal comprises at least one of the following for PDSCH reception for which the TRS is not needed:
- maximum modulation and coding scheme (MCS);
- maximum rank;
- maximum bandwidth;
- maximum frequency separation of PDSCH allocation from SSB location in frequency.

According to an embodiment, the UE capability of the allocation dependent tracking reference signal comprises at least one of the following for PDCCH reception for which the TRS is not needed:
- minimum required aggregation level;
- maximum bandwidth;
- maximum frequency separation of PDCCH allocation from SSB location in frequency.

According to an embodiment, the apparatus may comprise computer program code configured to cause the apparatus to receive an indication from the access node that said first and second parameters for the configuration of the PDCCH and PDSCH are transmitted without a periodic TRS.

According to an embodiment, the apparatus may comprise computer program code configured to cause the apparatus to monitor PDSCH reception performance to determine whether a previous indicated capability for MCS needs to be updated; and trigger, in response to determining that a TRS for a MCS with lower than the previous indicated capability for the MCS is needed, a new RRC capability indication signaling with said lower MCS to the access node.

According to an embodiment, the apparatus may comprise computer program code configured to cause the apparatus to monitor PDSCH reception performance in relation to previously allocated bandwidth; and trigger, in response to determining that the performance on the previously allocated bandwidth is below a predetermined threshold value, a new RRC capability indication signaling with a lower bandwidth threshold for TRS allocation to the access node.

According to an embodiment, the apparatus may comprise computer program code configured to cause the apparatus to monitor PDSCH reception performance in relation to previously allocated frequency separation of PDSCH allocation from SSB location in frequency; and trigger, in response to determining that a lower frequency separation of PDSCH allocation from SSB location in frequency is needed, a new RRC capability indication signaling with said lower frequency separation to the access node.

Such apparatuses may comprise e.g. the functional units disclosed in any of the Figures 1- 3 for implementing the embodiments.

A further aspect relates to a computer program product, stored on a non-transitory memory medium, comprising computer program code, which when executed by at least one processor, causes an apparatus at least to perform: signaling a UE capability of an allocation dependent tracking reference signal to an access node, said UE capability of the allocation dependent tracking reference signal comprising one or more capability parameters allowing to omit transmission of a periodical tracking reference signal, TRS; receiving a Synchronization Signal Block, SSB, from the access node; performing time and frequency tracking and parameter estimation based on the SSB; receiving a Physical Downlink Control Channel, PDCCH, data comprising first transmission parameters determined based on the UE capability of the allocation dependent tracking reference signal; determining a Physical Downlink Shared Channel, PDSCH, allocation for the UE based on the PDCCH data; receiving PDSCH data comprising second transmission parameters determined based on the UE capability of the allocation dependent tracking reference signal; monitoring performance of the PDSCH reception comprising transmission parameters determined based on the UE capability of the allocation dependent tracking reference signal; and initiating, in response to detecting the performance of the PDSCH reception being below at least one predetermined threshold, a radio resource control (RRC) capability indication signaling with the access node.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. An apparatus comprising:
means for signaling a UE capability of an allocation dependent tracking reference signal to an access node, said UE capability of the allocation dependent tracking reference signal comprising one or more capability parameters allowing to omit transmission of a periodical tracking reference signal, TRS;
means for receiving a Synchronization Signal Block, SSB, from the access node;
means for performing time and frequency tracking and parameter estimation based on the SSB;
means for receiving a Physical Downlink Control Channel, PDCCH, data comprising first transmission parameters determined based on the UE capability of the allocation dependent tracking reference signal;
means for determining a Physical Downlink Shared Channel, PDSCH, allocation for the UE based on the PDCCH data;
means for receiving PDSCH data comprising second transmission parameters determined based on the UE capability of the allocation dependent tracking reference signal;
means for monitoring performance of the PDSCH reception comprising the second transmission parameters determined based on the UE capability of the allocation dependent tracking reference signal; and
means for initiating, in response to detecting the performance of the PDSCH reception being below at least one predetermined threshold, a radio resource control (RRC) capability indication signaling with the access node.

2. The apparatus according to claim 1, comprising
means for indicating, in the UE capability of the allocation dependent tracking reference signal, allowed transmission conditions and parameters for the PDCCH and PDSCH for which the UE needs only an aperiodic TRS before reception of PDCCH and PDSCH.

3. The apparatus according to claim 1 or 2, comprising
means for indicating minimum required TRS transmission periodicity for said PDCCH and PDSCH transmission parameters.

4. The apparatus according to any preceding claim, comprising
means for receiving a Physical Uplink Shared Channel, PUSCH, grant comprising third transmission parameters determined based on the UE capability of allocation dependent tracking reference signal; and
means for determining a PUSCH allocation for the UE based on the PUSCH grant.

5. The apparatus according to claim 4, comprising
means for indicating maximum limits for the transmission parameters related to the PUSCH allowing to omit the transmission of the periodical TRS.

6. The apparatus according to any preceding claim, wherein the UE capability of the allocation dependent tracking reference signal comprises at least one of the following for PDSCH reception for which the TRS is not needed:
- maximum modulation and coding scheme (MCS);
- maximum rank;
- maximum bandwidth;
- maximum frequency separation of PDSCH allocation from SSB location in frequency.

7. The apparatus according to any preceding claim, wherein the UE capability of the allocation dependent tracking reference signal comprises at least one of the following for PDCCH reception for which the TRS is not needed:
- minimum required aggregation level;
- maximum bandwidth;
- maximum frequency separation of PDCCH allocation from SSB location in frequency.

8. The apparatus according to any preceding claim, comprising
means for receiving an indication from the access node that said first and second transmission parameters for the configuration of the PDCCH and PDSCH are transmitted without a periodic TRS.

9. The apparatus according to any preceding claim, comprising
means for monitoring PDSCH reception performance to determine whether a previous indicated capability for MCS needs to be updated; and
means for triggering, in response to determining that a TRS for a MCS with lower than the previous indicated capability for the MCS is needed, a new RRC capability indication signaling with said lower MCS to the access node.

10. The apparatus according to any preceding claim, comprising
means for monitoring PDSCH reception performance in relation to previously allocated bandwidth; and
means for triggering, in response to determining that the performance on the previously allocated bandwidth is below a predetermined threshold value, a new RRC capability indication signaling with a lower bandwidth threshold for TRS allocation to the access node.

11. The apparatus according to any preceding claim, comprising
means for monitoring PDSCH reception performance in relation to previously allocated frequency separation of PDSCH allocation from SSB location in frequency; and
means for triggering, in response to determining that a lower frequency separation of PDSCH allocation from SSB location in frequency is needed, a new RRC capability indication signaling with said lower frequency separation to the access node.

12. A user equipment comprising the apparatus according to any preceding claim.

13. A method comprising:
signaling, by a user equipment, UE, a UE capability of an allocation dependent tracking reference signal to an access node, said UE capability of the allocation dependent tracking reference signal comprising one or more capability parameters allowing to omit transmission of a periodical tracking reference signal, TRS;
receiving a Synchronization Signal Block, SSB, from the access node;
performing time and frequency tracking and parameter estimation based on the SSB;
receiving a Physical Downlink Control Channel, PDCCH, data comprising first transmission parameters determined based on the UE capability of allocation dependent tracking reference signal;
determining a Physical Downlink Shared Channel, PDSCH, allocation for the UE based on the PDCCH data;
receiving PDSCH data comprising second transmission parameters determined based on the UE capability of the allocation dependent tracking reference signal;
monitoring performance of the PDSCH reception comprising transmission parameters determined based on the UE capability of the allocation dependent tracking reference signal; and
initiating, in response to detecting the performance of the PDSCH reception being below at least one predetermined threshold, a radio resource control (RRC) capability indication signaling with the access node.

14. The method according to claim 13, comprising
monitoring PDSCH reception performance to determine whether a previous indicated capability for modulation and coding scheme (MCS) needs to be updated; and
triggering, in response to determining that a TRS for a MCS with lower than the previous indicated capability for the MCS is needed, a new RRC capability indication signaling with said lower MCS to the access node.

15. A computer program product comprising instructions which, when the program is executed by a processor of an apparatus, cause the apparatus to carry out:
signaling a UE capability of an allocation dependent tracking reference signal to an access node, said UE capability of the allocation dependent tracking reference signal comprising one or more capability parameters allowing to omit transmission of a periodical tracking reference signal, TRS;
receiving a Synchronization Signal Block, SSB, from the access node;
performing time and frequency tracking and parameter estimation based on the SSB;
receiving a Physical Downlink Control Channel, PDCCH, data comprising first transmission parameters determined based on the UE capability of the allocation dependent tracking reference signal;
determining a Physical Downlink Shared Channel, PDSCH, allocation for the UE based on the PDCCH data;
receiving PDSCH data comprising second transmission parameters determined based on the UE capability of the allocation dependent tracking reference signal;
monitoring performance of the PDSCH reception comprising transmission parameters determined based on the UE capability of the allocation dependent tracking reference signal; and
initiating, in response to detecting the performance of the PDSCH reception being below at least one predetermined threshold, a radio resource control (RRC) capability indication signaling with the access node
